# EUROPÄISCHE PATENTANMELDUNG

(11) **EP 1 832 944 A1**
(43) Veröffentlichungstag der Anmeldung: **12.09.2007**
(21) Anmeldenummer: 06004537.4
(22) Anmeldetag: 06.03.2006
(51) Int. Cl.: G05B 19/042, G05B 19/05

(54) **Baugruppe für ein Automatisierungssystem**

(71) Anmelder: SIEMENS AKTIENGESELLSCHAFT, 80333 München (DE)
(72) Erfinder: Schott, Thomas, 91353 Hausen (DE)

(57) **Zusammenfassung**

Die Erfindung betrifft eine Baugruppe (21) mit zumindest einem Ein-/Ausgang (22) und mit Mitteln zum Speichern eines Programms und ein Verfahren zum Projektieren eines Programms für eine Baugruppe (21) eines Automatisierungssystems, wobei jedem der Ein-/Ausgänge (22) eine absolute Adresse zugeordnet ist und beim Erstellen des Programms jeder absoluten Adresse eine eindeutige Bezeichnung zugeordnet wird. Zur Verbesserung der Steuerung und/oder Überwachung einer derartigen Baugruppe (22) wird ein elektronisches Anzeigemittel (25) vorgesehen, um die zugeordneten Bezeichnungen in Klartexten und/oder Symbolen (26) anzuzeigen.

## Beschreibung

Die Erfindung betrifft eine Baugruppe mit zumindest einem Ein-/Ausgang für ein Automatisierungssystem bzw. ein Verfahren zum Projektieren eines Programms für eine Baugruppe eines Automatisierungssystems.

Jeder Ein-/Ausgang einer Baugruppe in einem Automatisierungssystem hat eine vorgegebene absolute Adresse, die eine genaue, numerische Position in einem Arbeitsspeicher angibt. Jeder Ein-/Ausgang belegt eine I/O-Adresse (I/O: input/output), deren absolute Adresse durch eine Basisadresse bestimmbar ist. Dementsprechend entspricht die in dieser Anmeldung genannte absolute Adresse auch der physikalischen Adresse. Eine absolute Adresse kann durch verständliche symbolische Namen ersetzt werden, z.B. für den Eingang E0.1 das Symbol Taster 1. Absolute bzw. symbolische Adressen werden zur eindeutigen Identifizierung zwischen einem PLC-Programmlogik (PLC: programmable logic control) und den Baugruppenadressen immer beim Schreiben des PLC-Programmes verwendet. Damit ist es einfach und schnell nachzuvollziehen, welche absolute oder symbolische Adresse einem physikalischen Ein-/Ausgang zugeordnet ist.

Ferner soll für den Anwender eine ausgewählte Baugruppe mit anwenderspezifischen Informationen (z.B. Name, Bus-Adresse, Anlagenkennzeichen oder Ortskennzeichen) von außen ohne zusätzliche Hilfsmittel ersichtlich sein. Dies geschieht heute oft mittels Beschriftungsstreifen. Diese Beschriftungsstreifen müssen dabei vom Anwender mit spezieller Software und Hardware (z.B. Drucker) oder von Hand beschrieben werden.

Zur Darstellung der Zustände von Ein-/Ausgängen werden häufig LEDs (Light Emitting Diodes) verwendet. Dabei wird den Anwendern ein bestimmter Zustand der Baugruppe durch Beschriftung, Farbe und Blinkfrequenz der LEDs mitgeteilt.

Der Erfindung liegt die Aufgabe zugrunde, das HMI (Human-Maschine Interface) einer Baugruppe für ein Automatisierungssystem zu verbessern, wobei die Baugruppe zumindest einen Ein-/Ausgang aufweist.

Diese Aufgabe wird durch eine Baugruppe für ein Automatisierungssystem mit Mitteln zum Speichern eines Programms zum Steuern der Baugruppe und zumindest einen Ein-/Ausgang gelöst, wobei jedem der Ein-/Ausgänge eine absolute/physikalische Adresse zugeordnet ist und beim Projektieren des Programms jeder absoluten Adresse eine eindeutige Bezeichnung zugeordnet ist, wobei ein elektronisches Anzeigemittel vorgesehen ist, um die zugeordneten Bezeichnungen in Klartexten und/oder Symbolen anzuzeigen.

Zudem wird diese Aufgabe durch ein Verfahren zum Projektieren eines Programms für eine Baugruppe eines Automatisierungssystems gelöst, bei dem die Baugruppe zumindest einen Ein-/Ausgang aufweist, wobei jedem der Ein-/Ausgänge eine absolute/physikalische Adresse zugeordnet ist und beim Projektieren des Programms jeder absoluten Adresse eine eindeutige Bezeichnung zugeordnet wird, wobei die zugeordneten Bezeichnungen durch elektronische Anzeigemittel in Klartexten und/oder Symbolen angezeigt werden.

Der Erfindung liegt die Aufgabe zugrunde, Informationen über einen Ein-/Ausgang einer Baugruppe durch eine neuartige Displaytechnologie, insbesondere OLED (Organic Light-Emitting Diode), darzustellen. Hierbei weist eine derartige Baugruppe Mittel zum Speichern eines Programms zum Steuern dieser Baugruppe und zumindest einen Ein-/Ausgang auf, wobei jedem der Ein-/Ausgänge eine absolute Adresse zugeordnet ist, und beim Erstellen des Programms jeder absoluten Adresse eine eindeutige Bezeichnung (z.B. Name, Bus-Adresse, Anlagenkennzeichen oder Ortskennzeichen) zugeordnet wird. In dieser Baugruppe ist ein elektronisches Anzeigemittel vorgesehen, um die zugeordneten Bezeichnungen in Klartext und/oder Symbolen anzuzeigen. Beim Herunterladen eines Projekts (z.B. Programm, Hardware- und Vernetzungsinformation), der die Verwendung dieser Baugruppe in einem Automatisierungssystem bedient, wird auch die absolute/symbolische Bezeichnung mit in die Baugruppe geladen. Damit es möglich ist, die im Projekt definierten absoluten/symbolischen Bezeichnungen entsprechend der Stellen der Ein-/Ausgänge direkt nach dem Herunterladen darzustellen. D.h. die Klartexte und Symbole können die absolute bzw. symbolische Adresse jeweils für jeden der Ein-/Ausgänge beinhalten. Durch die erfindungsgemäße Baugruppe ist keine Beschriftung und in Folge dessen kein extra Drucker oder händisch geschriebener Aufkleber mehr notwendig, und es kann die Zeit für die Projektierung und Inbetriebnahme einer Baugruppe sowie die Turn-Around-Zeit nach Änderung der Projektierung reduziert werden.

Vorteilhaftweise wird die Information über einen aktuellen Zustand der Baugruppe in Verbindung mit einer absoluten Adresse in Klartext und/oder Symbolen angezeigt. Diese Information kann gleichzeitig mit der absoluten Adresse mittels des Anzeigemittels gezeigt werden, wobei an dieser absoluten Adresse ein Ein-/Ausgang zugeordnet ist, durch den eine Steuerung ausgeführt und damit die Baugruppe in den Zustand gebracht wird. Dadurch wird dem Anwender eine anwenderspezifische Information dargestellt. Dadurch sind die Zustände der Baugruppe bzgl. der Ein-/Ausgänge eindeutig vorzeigbar bzw. erkennbar. Somit wird eine eindeutige Beziehung bzw. ein leicht verständliches Interface (z.B. HMI-Interface) zwischen den Anwendern und der Baugruppe bzw. dem System ermöglicht. Die Wartung bzw. Reparatur der Baugruppe kann dadurch auch leichter ausgeführt werden. Das Einstellen und Ändern von Parametern der Baugruppe kann ohne Computer und technische Software erfolgen.

Gemäß einer vorteilhaften Ausgestaltung der Erfindung wird das Anzeigemittel (Display) an der Frontseite der Ein-/Ausgänge angeordnet, z.B. können die Frontabdeckungen der Ein-/Ausgänge mit einem Display so bestückt werden, wobei das Display auch eine so große Fläche wie die Frontabdeckungen abdecken kann. Dazu werden die auf dem Display angezeigten Bezeichnungen auch der Anordnung oder der Reihenfolge der Ein-/Ausgänge entsprechend dargestellt. Dadurch kann die absolute Adresse bzw. die anwenderspezifischen Informationen eins zu eins nach der Anordnung der Ein-/Ausgänge von außen ersichtlich angezeigt werden.

Gemäß einer weiteren vorteilhaften Ausgestaltung der Erfindung ist das Anzeigemittel als Touchscreens ausgebildet. Da ein Touchscreen hervorragende Eigenschaften im Sinne von HMI (Human Maschine Interface) anbietet, mittels eines derartigen Displays die Ausgaben und Eingaben von Informationen gleichzeitig ohne Aufwand möglich sind, d.h. man kann Aktionen direkt auf gezeigten Objekten ausführen. Somit können die Kosten und Plätze, beispielsweise für Tasten, gespart werden.

Als Anzeigemittel finden beispielsweise organische Leuchtdioden, auch OLED genannt, Verwendung. Eine moderne OLED-Anzeige kann so dünn wie eine Folie sein und dadurch eine entsprechend hohe Beweglichkeit bzw. Verformbarkeit aufweisen. Sie benötigt gegenüber der Flüssigkristallanzeige (LCD: Liquid Crystal Display) oder LEDs-Anzeige deutlich weniger Energie, macht eine Hintergrundbeleuchtung überflüssig und weist einen großen Blickwinkelbereich (bis zu 170°) und eine große Schaltgeschwindigkeit auf.

Die Erfindung wird im Folgenden im Rahmen der Ausführungsbeispiele anhand der Figuren näher dargestellt. Es zeigen:
FIG 1: eine Baugruppe mit LEDs als Zustandanzeige
FIG 2: eine erfindungsgemäße Baugruppe mit OLED-Anzeige.

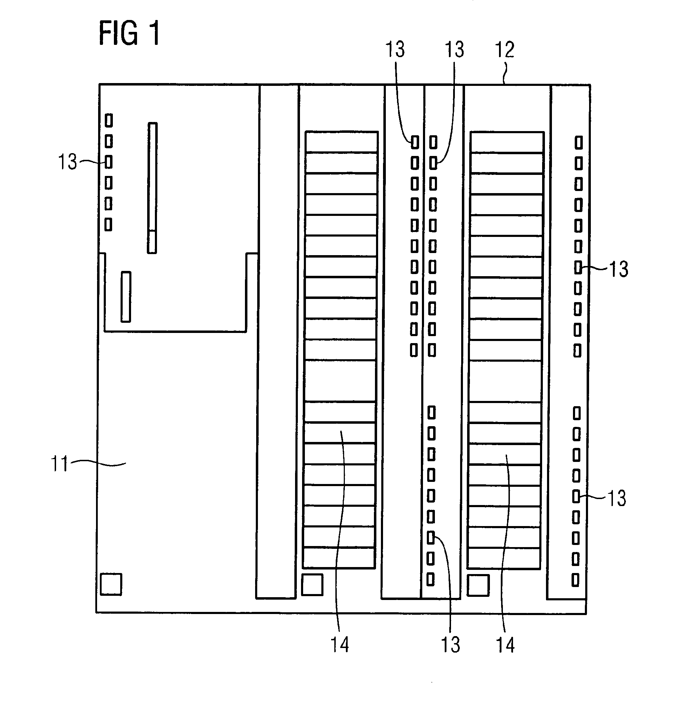

Die in FIG 1 gezeigte herkömmliche Baugruppe 11 umfasst eine Anordnung von Ein-/Ausgängen 12 und eine LEDs-Anzeige 13, wobei jedem der Ein-/Ausgänge 12 eine absolute Adresse zugeordnet ist. Die absoluten Adressen werden durch verständliche symbolische Namen ersetzt und jeweils durch einen Beschriftungsstreifen 14 auf den entsprechenden Stellen der Ein-/Ausgänge 12 gekennzeichnet. Diese Beschriftungsstreifen 14 müssen dabei umständlich mit spezieller Software und Hardware (z.B. Drucker) oder von Hand beschrieben werden.

Die Darstellungen von Zuständen sind bei dieser Baugruppe 11 mit Hilfe von LEDs 13 realisiert, dabei wird für jeden Ein-/Ausgang 12 ein einzelnes LED 13 bestückt, um einen aktuellen Zustand des Ein-/Ausgangs 12 durch Leuchtung (Blink) oder Farbe des LEDs 13 darzustellen. Zudem ist es für diese Baugruppe 11 unmöglich, eine dynamische Information über die Zustände der Baugruppe 11 in Verbindung mit einem aktuellen Zustand eines Ein-/Ausgangs 12 darzustellen.

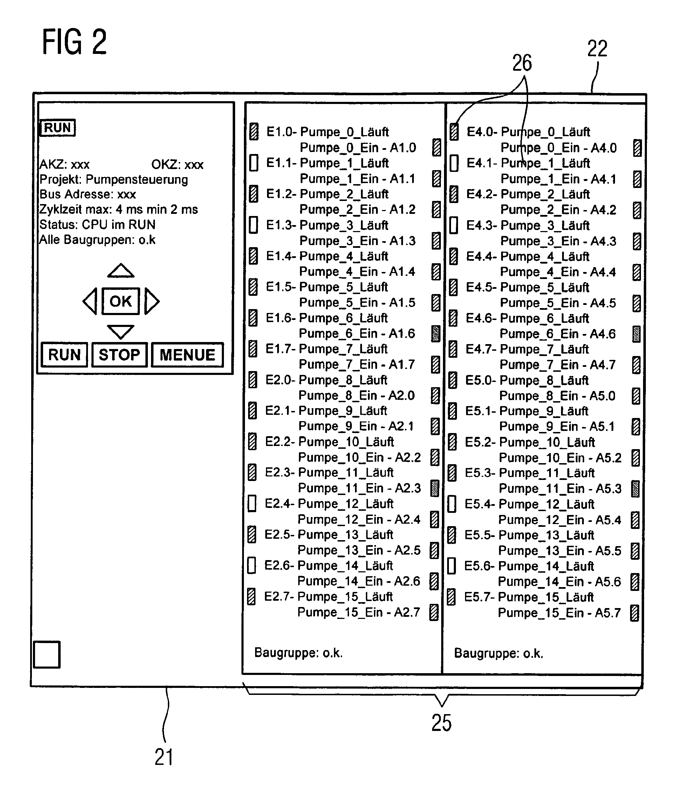

FIG 2 zeigt eine erfindungsgemäße Baugruppe 21 mit ebenfalls einer Mehrzahl von Ein-/Ausgängen 22. Ein Programm zum Steuern der Baugruppe 21 wird in dieser Baugruppe 21 gespeichert, wobei beim Projektieren des Programms jeder absoluten Adresse eine eindeutige Bezeichnung (z.B. Name, Bus-Adresse, Anlagenkennzeichen oder Ortskennzeichen) zugeordnet wird.

Diese Baugruppe 21 umfasst eine OLED-Anzeige 25, um die zugeordneten Bezeichnungen in Klartext und/oder Symbolen 26 anzuzeigen. Die so genannten Klartexte und die Symbole 26 beinhalten die absolute Adresse bzw. symbolische Adresse jeweils für jeden der Ein-/Ausgänge 22. Die projektierten Bezeichnungen sind mittels der OLED-Anzeige ebenfalls automatisch darstellbar, dabei werden Informationen über die aktuellen Zustände der Baugruppe 21 in Verbindung mit den absoluten Adressen, in Klartexten und/oder Symbolen 26 angezeigt, d.h. die Zustände der Baugruppe 21 in Veranlassung einer Steuerung durch den Ein-/Ausgänge 22 eindeutig vorzeigbar bzw. erkennbar sind. Auf der OLED-Anzeige können beispielsweise auch symbolische Informationen zur Baugruppe, den Ein-/Ausgängen oder Funktionstasten usw. dargestellt werden, dadurch werden eine eindeutige Beziehung bzw. ein verständliches Interface (z.B. HMI) ermöglicht, und die Wartung bzw. Reparatur der Baugruppe 21 leicht ausgeführt.

## Patentansprüche

1. Baugruppe (21) für ein Automatisierungssystem mit
- Mitteln zum Speichern eines Programms zum Steuern der Baugruppe (21),
- zumindest einem Ein-/Ausgang (22), wobei jedem der Ein-/Ausgänge (22) eine absolute Adresse zugeordnet ist,
- und wobei beim Erstellen des Programms jeder absoluten Adresse eine eindeutige Bezeichnung zugeordnet wird,
**dadurch gekennzeichnet , dass** ein elektronisches Anzeigemittel (25) vorgesehen ist, um die zugeordneten Bezeichnungen in Klartexten und/oder Symbolen (26) anzuzeigen.

2. Baugruppe (21) nach Anspruch 1,
**dadurch gekennzeichnet , dass** eine Information über einen aktuellen Zustand der Baugruppe (21) in Verbindung mit der zugeordneten Bezeichnung in Klartext und/oder Symbolen (26) anzeigbar ist.

3. Baugruppe () nach Anspruch 1 oder 2,
**dadurch gekennzeichnet , dass** das Anzeigemittel (25) zur Anordnung der Ein-/Ausgänge (22) entsprechend der Anzeige der Bezeichnungen und/oder der Zustände an der Frontseite der Ein-/Ausgänge (22) angeordnet sind.

4. Baugruppe () nach einem der vorherigen Ansprüche,
**dadurch gekennzeichnet , dass** das Anzeigemittel (25) als Touchscreen ausgebildet ist.

5. Baugruppe () nach einem der vorherigen Ansprüche,
**dadurch gekennzeichnet , dass** das Anzeigemittel (25) organische Leuchtdioden aufweist.

6. Verfahren zum Erstellen eines Programms für eine Baugruppe (21) eines Automatisierungssystems, bei dem die Baugruppe zumindest einen Ein-/Ausgang (22) aufweist, wobei jedem der Ein-/Ausgänge (22) eine absolute Adresse zugeordnet wird, und wobei beim Projektieren des Programms jeder absoluten Adresse eine eindeutige Bezeichnung zugeordnet wird,
**dadurch gekennzeichnet , dass** die zugeordneten Bezeichnungen durch elektronische Anzeigemittel (25) in Klartexten und/oder Symbolen (26)angezeigt werden.

7. Verfahren nach Anspruch 5,
**dadurch gekennzeichnet , dass** eine Information über einen aktuellen Zustand der Baugruppe in Klartext und/oder Symbolen (26) angezeigt wird.
